# EUROPÄISCHE PATENTSCHRIFT

(11) **EP 1 891 408 B1**
(45) Veröffentlichungstag und Bekanntmachung des Hinweises auf die Patenterteilung: **15.03.2017**
(21) Anmeldenummer: 06763667.0
(22) Anmeldetag: 13.06.2006
(51) Int. Cl.: G01J 3/44, G01J 3/10, G01N 21/65, H01S 5/0625

(54) **VERFAHREN UND VORRICHTUNG ZUR ERZEUGUNG UND DETEKTION EINES RAMAN-SPEKTRUMS**
METHOD AND DEVICE FOR PRODUCING AND DETECTING A RAMAN SPECTRUM
PROCEDE ET DISPOSITIF POUR GENERER ET DETECTER UN SPECTRE DE RAMAN

(30) Priorität: 14.06.2005 DE 102005028268
(43) Veröffentlichungstag der Anmeldung: 27.02.2008
(73) Patentinhaber: Forschungsverbund Berlin e.V., 12489 Berlin (DE)
(72) Erfinder: KLEHR, Andreas, 13156 Berlin (DE); SUMPF, Bernd, 15745 Wildau (DE); Dr. MAIWALD, Martin, 12045 Berlin (DE); SCHMIDT, Heinar, 14129 Berlin (DE)
(74) Vertreter: Gulde & Partner
(86) Internationale Anmeldenummer: PCT/EP2006/063141
(87) Internationale Veröffentlichungsnummer: WO 2006/134103

(56) Entgegenhaltungen:
- WO-A-99/35519
- WO-A-2005/038437
- WO-A-2005/064314
- US-A- 5 856 869
- US-A- 5 946 090

## Beschreibung

Die Erfindung betrifft ein Verfahren und eine Vorrichtung mit den in den Oberbegriffen der Ansprüche 1 (Verfahren) und 13 (Vorrichtung) genannten Merkmalen.

Die Raman-Spektroskopie hat sich in der letzten Zeit, nicht zuletzt auf Grund der Entwicklung von kostengünstigeren Halbleiterlasern, zu einer etablierten Methode in den Materialwissenschaften, der chemischen Verfahrenstechnik, der Pharmazie, der Umwelttechnik, der Analytik und in der Prozessüberwachung entwickelt. In vielen Anwendungsfällen kommen dabei Sonden zum Einsatz, die in der Regel mit einem Spektrometer gekoppelt werden.

Die Anwendung der Raman-Spektroskopie in den oben genannten Gebieten wird regelmäßig dadurch eingeschränkt, dass neben den gewünschten Raman-Signalen häufig auch ein Fluoreszenzhintergrund oder eine breitbandige Untergrundstreuung angeregt wird. Insbesondere bei der Anregung des Raman-Effekts im sichtbaren Spektralbereich neigen vor allem biologische Proben zur Fluoreszenz, wodurch die Raman-Spektren völlig verdeckt werden können. Zwar tritt bei einer Anregung des Raman-Effekts mit Strahlung im nahen Infrarotbereich praktisch keine Fluoreszenzanregung mehr auf, jedoch verringert sich die Intensität der Raman-Streustrahlung mit der vierten Potenz der absoluten Wellenzahl, so dass das spektral-optische System eine deutlich größere Empfindlichkeit aufweisen muss, was mit einem hohen apparativen Aufwand einhergeht.

Ein weiteres Problem besteht darin, dass bei der Verwendung von CCD-Detektoren vordergründig eine charakteristische Struktur der Baseline, das so genannte Fixed Pattern auftritt. Das Fixed Pattern ist eine feststehende Störstruktur, welche die Bilder von CCD-Kameras oder CCD-Abtastern überlagert. Durch das Fixed Pattern werden die schwachen Raman-Signale (bei Verwendung von CCD-basierten Empfängern) maskiert und die erreichbare Empfindlichkeit begrenzt. Herkömmliche Verfahren korrigieren dies mit Dunkeloder Leerspektren. Durch eine solche Korrektur kann das Fixed Pattern jedoch oft nicht ausreichend eliminiert werden, da in einem anderen Intensitätsbereich gemessen und dadurch die physikalische Natur des Fixed Pattern nicht ausreichend berücksichtigt wird.

Sowohl die Fluoreszenzunterdrückung als auch die Untergrundkorrektur sind in der Raman-Spektroskopie auf vielfältige Weise untersucht worden. Beispielsweise kann die Fluoreszenz durch schnelles Gating im Spektrum eliminiert werden, wobei ausgenutzt wird, dass die Fluoreszenz langsam im Vergleich zum Raman-Effekt ist. Dies erfordert jedoch aufwendige Versuchsanordnungen mit gepulsten Lasern, wie beispielsweise aus P. Matousek et al. "Fluorescence suppression in resonance Raman spectroscopy using a highperformance picosecond Kerr gate", J. Raman Spectroscopy 2001, 32, 983-988 bekannt ist.

Weiterhin ist es aus A. P. Shreve et al., Appl. Spectroscopy 1992, 46, 707 bekannt, dass durch die Verwendung zweier Laserwellenlängen, die gegeneinander verschoben sind, eine Untergrundkorrektur zur Beseitigung der Fluoreszenz realisiert werden kann. Als Lichtquelle wird bei Shreve et al. ein Ti:Saphir Laser verwendet, der mit Hilfe eines diffraktiven Elements auf zwei Wellenlängen in der Frequenz verschoben wird. Ein Nachteil dieser Anordnung ist vor allem im komplexen Aufbau zu sehen.

Die Veröffentlichung Applied Spectroscopy vol. 56, Nr. 7, Seiten 834 - 845 (2002); Jun Zhao et al:"Automated Fluorescence Rejection Using Shifted Excitation Raman Difference Spectroscopy" offenbart ein Verfahren und eine Vorrichtung zur Erzeugung und Detektion eines Raman-Spektrums, wobei durch Verwendung zweier Laserwellenlängen, die gegeneinander verschoben sind, eine Untergrundkorrektur zur Beseitigung der Fluoreszenz realisiert werden kann.

Die Veröffentlichung Wenzel H et al. "High-power 783 nm distributed feedback laser", Electronics Letters, Vol. 40, No. 2, pp 123-124, XP006021339 offenbart die Verwendung einer Laserdiode mit unterschiedlichen Ausgangsleistungen und sich dadurch verändernder Emissionswellenlänge.

Der wesentliche Nachteil nach dem Stand der Technik besteht darin, dass die vorgenannten Verfahren und Vorrichtungen zur Erzeugung und Detektion von Raman-Spektren zur Erzielung einer ausreichenden Empfindlichkeit einen hohen apparativen Aufwand voraussetzen.

Die Aufgabe der vorliegenden Erfindung besteht darin, ein Verfahren und eine Vorrichtung zur Erzeugung und Detektion eines Raman-Spektrums eines zu untersuchenden Mediums anzugeben, mit welchen das Raman-Spektrum eines zu untersuchenden Mediums mit einer hohen Empfindlichkeit bei vergleichsweise geringem apparativen Aufwand ermittelt werden kann. Insbesondere soll die Verwendung mehrerer Anregungslichtquellen vermieden werden können. Weiterhin soll das Verfahren zeitlich hochaufgelöste in-situ Messungen ermöglichen.

Diese Aufgaben werden erfindungsgemäß gelöst durch die Merkmale der Ansprüche 1 (Verfahren) und 13 (Vorrichtung). Bevorzugte Ausgestaltungen der Erfindung sind in den Unteransprüchen enthalten.

Das erfindungsgemäße Verfahren zur Erzeugung und zur Detektion eines Raman-Spektrums eines zu untersuchenden Mediums weist folgende Verfahrensschritte auf:
- Erzeugung elektromagnetischer Anregungsstrahlung mittels einer Laserdiode mit einem internen frequenzselektiven Element,
- Einkoppeln der Anregungsstrahlung in das zu untersuchende Medium,
- wobei die Laserdiode zur alternierenden Erzeugung unterschiedlicher Anregungswellenlängen mittels des an die Laserdiode angelegten elektrischen Stroms alternierend mit zwei unterschiedlichen Anregungsbedingungen angesteuert wird, wobei das Hin- und Herschalten zwischen den Anregungsbedingungen mit einer Frequenz größer als 1 Hz erfolgt,
- spektrale Analyse der vom zu untersuchenden Medium gestreuten elektromagnetischen Strahlung durch Einkoppeln der gestreuten Strahlung in ein spektral-optisches System, wobei das spektral-optische System ein Spektrograph mit CCD-Zeile ist,
- wobei aus der gestreuten Strahlung für die unterschiedlichen Anregungswellenlängen jeweils mindestens ein Raman-Spektrum detektiert wird und aus den mindestens zwei detektierten Raman-Spektren unterschiedlicher Anregungswellenlängen ein Raman-Spektrum des zu untersuchenden Mediums ermittelt wird, in dem der Fluoreszenzuntergrund rechnerisch eliminiert ist, und
- wobei die Detektion der einzelnen Raman-Spektren unterschiedlicher Anregungswellenlängen mit der alternierenden Ansteuerung der Laserdiode synchronisiert wird, und
- wobei die Detektion eines Raman-Spektrums jeweils innerhalb eines Zeitintervalls erfolgt, in dem die Stromstärke des an die Laserdiode angelegten Stroms konstant gehalten wird.

Ein besonderer Vorteil des erfindungsgemäßen Verfahrens besteht darin, dass lediglich eine Laserdiode verwendet wird, wobei es durch die alternierende Ansteuerung der Laserdiode mit unterschiedlichen Anregungsbedingungen (d.h. Ansteuerung der Laserdiode mit unterschiedlichen Stromstärken) möglich ist, dass die Laserdiode auf zwei unterschiedlichen Wellenlängen alternierend emittiert, so dass für diese zwei unterschiedlichen (Anregungs-)Wellenlängen jeweils ein Raman-Spektrum detektiert werden kann und aus den mindestens zwei erhaltenen Raman-Spektren ein Raman-Spektrum für das zu untersuchende Medium berechnet werden kann, wobei der Fluoreszenzanteil durch die Detektion von mindestens zwei frequenzverschobenen Raman-Spektren herausgerechnet werden kann. Weiterhin ist es möglich, bei Verwendung von CCD-Elementen im spektral-optischen System das Fixed Pattern und einen gerätespezifischen spektralen Untergrund (Filtercharakteristik) zu eliminieren. Hierdurch wird eine hohe Nachweisempfindlichkeit bei vergleichsweise geringem apparativen Aufwand erhalten, insbesondere ist lediglich eine Laserdiode als Anregungslichtquelle erforderlich. Dazu wird erfindungsgemäß eine Laserdiode mit internem frequenz-selektivem Element (vorzugsweise Gitter, Etalon oder Mach-Zehnder-Interferometer) verwendet. Ein weiterer Vorteil der Erfindung besteht darin, dass die Ansteuerung der Laserdiode über die Stromstärke der Laserdiode erfolgt. Daher kann zwischen den unterschiedlichen Anregungsbedingungen schnell hin- und hergeschaltet werden, so dass sich schnell ändernde Prozesse mittels Raman-Spektroskopie trotz geringem apparativen Aufwand mit einer hohen Empfindlichkeit überwacht werden können. Die Ansteuerung der Laserdiode über die Stromstärke ist vorteilhafterweise wesentlich schneller als die Ansteuerung der Laserdiode über die Temperatur. Weiterhin wird der apparative Aufwand der Vorrichtung gesenkt, da die Vorrichtung bevorzugtermaßen kein Mittel zur Variation und/oder Steuerung der Temperatur der Laserdiode aufweist.

Zur Eliminierung des Fixed Pattern ist es erforderlich, dass die zwei zur Anregung verwendeten Wellenlängen einen ausreichenden Wellenlängenabstand aufweisen. Grundsätzlich wäre zu erwarten, dass der notwendige Wellenlängenabstand bei Verwendung einer Laserdiode ohne externe Kavität nicht realisierbar ist. Darüber hinaus sind Laserdioden mit externer Kavität weniger kompakt. Es wurde jedoch gefunden, dass insbesondere bei Verwendung einer Laserdiode mit internem frequenzselektiven Element ein zur Eliminierung des Fixed Pattern ausreichender Wellenlängenabstand (durch Ansteuerung der Laserdiode mit unterschiedlichen Stromstärken) erzielt werden kann.

Die Linienbreite (FWHM) der Laserdiode beträgt vorzugsweise kleiner 30 GHz, besonders bevorzugt kleiner 3 GHz, besonders bevorzugt kleiner 100 MHz, besonders bevorzugt kleiner 10 MHz.

Durch die Verwendung einer schmalbandigen Laserdiode mit einem internen frequenz-selektiven Element wird es weiterhin möglich, auf eine regelmäßige Kalibrierung (d.h. vor oder während jeder Messung) der durch die von der (mit unterschiedlichen Anregungsbedingungen) angesteuerten Laserdiode emittierten Strahlung zu verzichten. Es ist lediglich notwendig, in großen Zeitabständen eine Wellenlängenkontrolle vorzunehmen. Dies reduziert den apparativen und zeitlichen Aufwand erheblich, wodurch ein Einsatz des erfindungsgemäßen Verfahrens auch mit konventionellen, preiswerten Geräten möglich wird. Eine Lichtquelle, die eine solche Echtzeit-Untergrundunterdrückung für die Raman-Spektroskopie ermöglicht, erforderte nach dem bisherigen Stand der Technik einen deutlich höheren apparativen Aufwand. Die verwendete Laserdiode ist vorzugsweise monolithisch und für einen vorgegebenen Wellenlängenbereich durchstimmbar schmalbandig ausgebildet. Als Detektor wird eine CCD-Zeile verwendet. Als spektral-optisches System wird ein Spektrograph mit CCD-Zeile verwendet. Weiterhin ist es vorgesehen, die Laserdiode mittels einer Stromquelle anzusteuern, wobei die Ausgangsleistung der Anregungsquelle moduliert wird. Zur Modulation der Anregungsquelle wird vorzugsweise ein Funktionsgenerator, besonders bevorzugt ein Rechteckgenerator verwendet. Es ist weiterhin vorgesehen, das spektral-optische System mit einem Datenverarbeitungsgerät zur Auswertung der vom spektral-optischen System erhaltenen Messdaten zu verbinden. Um für die unterschiedlichen Anregungswellenlängen (welche alternierend in das Medium eingekoppelt werden) auch die dazugehörigen Raman-Spektren zu detektieren, was zur Untergrundunterdrückung (Berechnung) notwendig ist, ist es erfindungsgemäß vorgesehen, nicht nur die Anregungsquelle zur Ansteuerung der Laserdiode, sondern auch das spektral-optische System bzw. das mit dem spektral-optischen System verbundene Datenverarbeitungsgerät zu toren. Hierzu sind neben der Anregungsquelle auch das spektral-optische System und das Datenverarbeitungsgerät mit dem Mittel zur Ansteuerung der Laserdiode (Modulator) verbunden.

Die Vorrichtung zur Erzeugung und zur Detektion eines Raman-Spektrums umfasst: eine als Anregungslichtquelle fungierende Laserdiode mit einem internen frequenz-selektiven Element, wobei die Laserdiode zur Erzeugung unterschiedlicher Anregungswellenlängen mit einer von einem Modulator modulierten Stromquelle verbunden ist, und der Modulator die Stromquelle alternierend moduliert, wobei das Hin- und Herschalten mit einer Frequenz größer als 1 Hz erfolgt, Mittel zur Einkopplung der von der Laserdiode emittierten Anregungsstrahlung in das zu untersuchende Medium, Mittel zur Einkopplung der vom zu untersuchenden Medium gestreuten Strahlung in ein spektral-optisches System, wobei das spektral-optische System ein Spektrograph mit CCD-Zeile ist, ein Datenverarbeitungsgerät, das mit dem spektral-optischen System verbunden ist, wobei das Datenverarbeitungsgerät aus den mindestens zwei detektierten Raman-Spektren unterschiedlicher Anregungswellenlängen ein Raman-Spektrum des zu untersuchenden Mediums berechnet, in dem der Fluoreszenzuntergrund rechnerisch eliminiert ist, und wobei das spektral-optische System und/oder das Datenverarbeitungsgerät mit dem Modulator verbunden und die Detektion der einzelnen Raman-Spektren unterschiedlicher Anregungswellenlängen mit der alternierenden Ansteuerung der Laserdiode synchronisiert ist.

Hierdurch kann die Laserdiode sehr schmalbandig auf zwei Wellenlängen alternierend, entsprechend der Ansteuerung emittieren, ohne dass es einer vorherigen Kalibrierung der einzelnen Wellenlängen bzw. der Laserdiode bedarf. Mit der erfindungsgemäßen Vorrichtung können Raman-Spektren mit hoher Empfindlichkeit (bei Eliminierung von Fixed Pattern und Fluoreszenzanteil) ermittelt werden, wobei die erfindungsgemäße Vorrichtung einen vergleichsweise einfachen Aufbau (lediglich eine Anregungslichtquelle, keine externe Kavität) aufweist.

Vorzugsweise weist die erfindungsgemäße Vorrichtung zusätzlich optische Filter, beispielsweise zur Eliminierung der Rayleigh-Linie auf.

Das spektral-optische System und/oder das Datenverarbeitungsgerät ist mit dem Mittel zur Ansteuerung der Laserdiode (z.B. Modulator) verbunden, da hierdurch die Anregung mit unterschiedlichen Wellenlängen und die Detektion des gestreuten Licht synchron erfolgen können. Hierdurch lassen sich beispielsweise schnell ändernde Prozesse zeitaufgelöst überwachen. Hierzu kann die Laserdiode bzgl. ihrer Anregungsbedingungen auch mit deutlich höheren Frequenzen, beispielsweise größer 10 Hz (besonders bevorzugt größer 30 Hz) angesteuert werden.

Der Modulator ist vorzugsweise ein Funktionsgenerator, besonders bevorzugt ein Rechteckgenerator. Das Mittel zur Einkopplung der Anregungsstrahlung in das zu untersuchende Medium und das Mittel zur Einkopplung der vom zu untersuchenden Medium rückgestreuten Strahlung in das spektral-optische System weist vorzugsweise eine optische Faser auf.

Die Erfindung wird nachstehend näher erläutert. Es zeigen:
- Fig. 1: eine Vorrichtung zur Erzeugung und Detektion eines Raman-Spektrums gemäß der vorliegenden Erfindung in schematischer Darstellung,
- Fig. 2: das Raman-Spektrum von Phenanthren bei zwei unterschiedlichen Anregungswellenlängen λ₁, und λ₂,

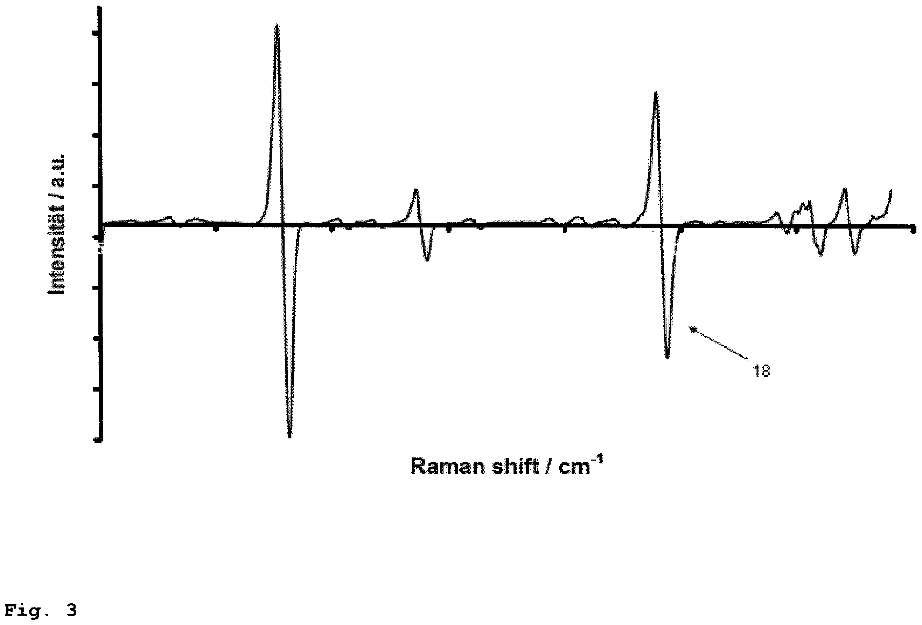

- Fig. 3: das Differenzspektrum der beiden Raman-Spektren aus Fig. 2,
- Fig. 4: eine Rekonstruktion des Differenzspektrums aus Fig. 3 und
- Fig. 5: ein Referenzspektrum von Phenanthren.

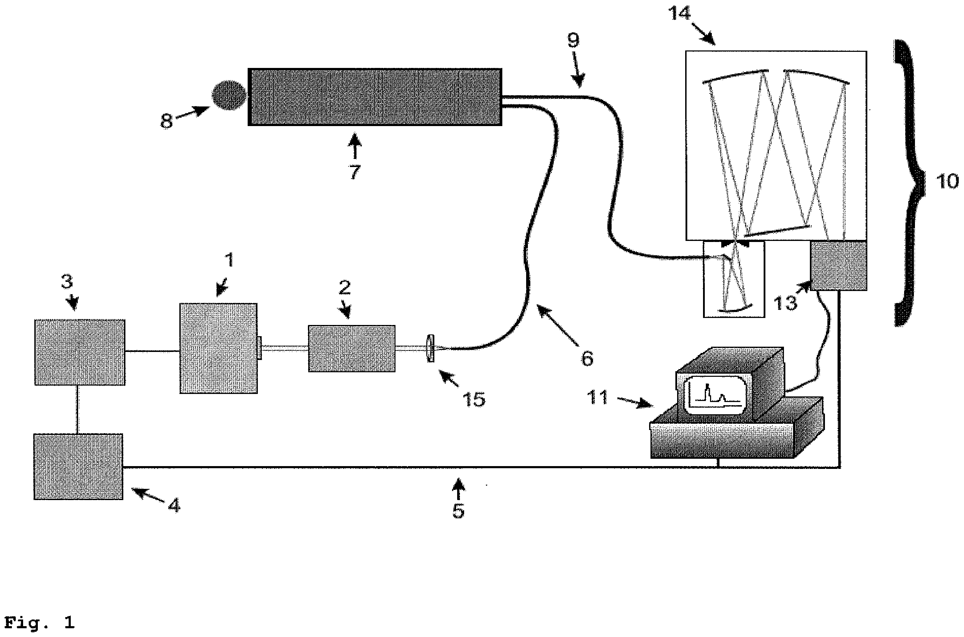

Fig. 1 zeigt eine Vorrichtung zur Erzeugung und Detektion eines Raman-Spektrums mit einer hohen Empfindlichkeit bei einem vergleichsweise geringen apparativen Aufwand. Die Laserdiode 1 ist mit der Gleichstromquelle 3 verbunden, wobei die Gleichstromquelle 3 mit einem Rechteckgenerator 4 verbunden ist, der Rechteckpulse mit einer Frequenz von 0,1 Hz erzeugt. Mit diesen Rechteckpulsen des Rechteckgenerators 4 wird die Ausgangsleistung der Gleichstromquelle 3 moduliert. Dadurch wird die Laserdiode 1 alternierend mit zwei unterschiedlichen elektrischen Strömen (Stromstärken) angesteuert. Hierdurch emittiert die Laserdiode 1 schmalbandig auf zwei unterschiedlichen Wellenlängen, wodurch der Einsatz mehrerer Anregungslichtquellen vermieden werden kann. Im vorliegenden Beispiel wird die Laserdiode 1 mit Stromstärken von 150 mA und 250 mA alternierend mit einer Frequenz von 0,1 Hz angesteuert.

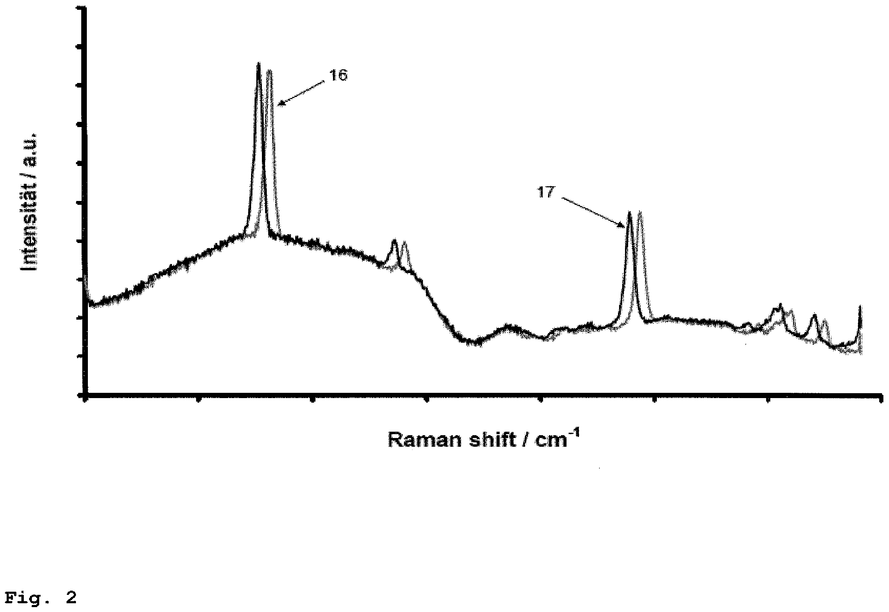

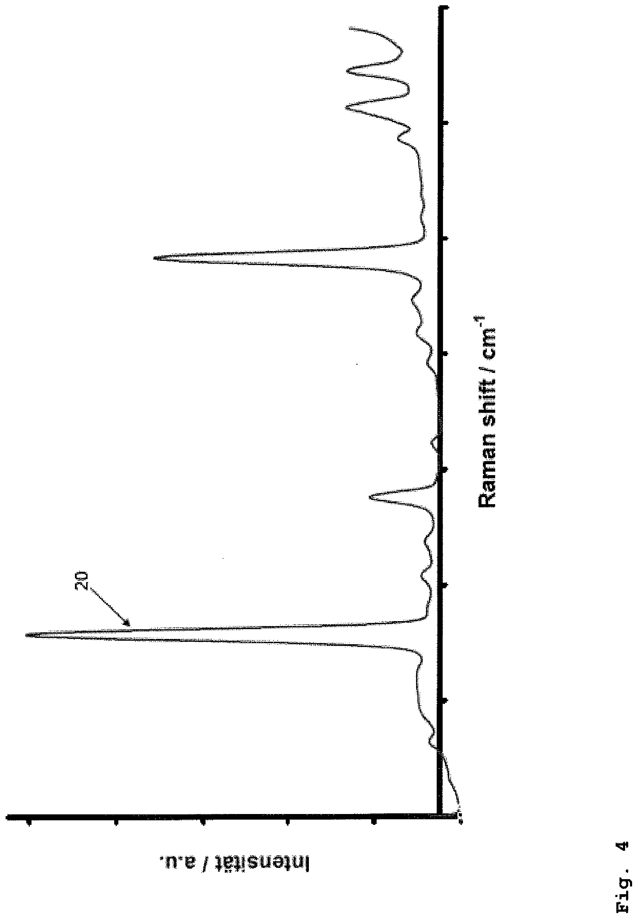

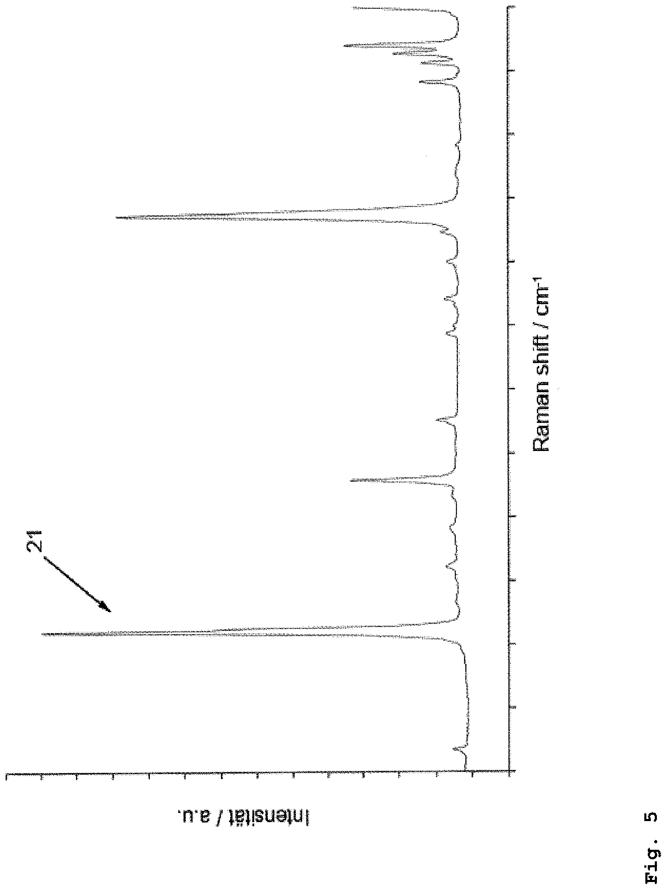

Hierdurch emittiert die Laserdiode 1 alternierend mit den Wellenlängen λ₂=785,0 nm und λ₁=784,5 nm. Diese Wellenlängen werden nun über den optischen Isolator 2 und das Linsensystem 15 in die optische Faser 6 eingekoppelt. Danach wird die Anregungsstrahlung über den Raman-Messkopf 7 in das zu untersuchende Medium 8 eingekoppelt. Das zu untersuchende Medium 8 ist vorzugsweise derart angeordnet, dass kein die Messung beeinträchtigendes Störlicht in den Raman-Messkopf 7 gelangt. Die Anregungstrahlung wird nun teilweise von dem zu untersuchenden Medium 8 gestreut und die gestreute Strahlung des zu untersuchenden Mediums 8 wird über den Raman-Messkopf 7 sowie die optische Faser 9 in das spektral-optische System 10, bestehend aus dem Spektrograph 14 und der CCD-Zeile 13, eingekoppelt. Im spektral-optischen System 10 wird nun alternierend das Spektrum 16 der rückgestreuten Strahlung bei der Anregungswellenlänge λ₁ sowie das Spektrum 17 der rückgestreuten Strahlung bei der Anregungswellenlänge λ₂ detektiert (siehe Fig. 2) und die Daten über diese Spektren 16, 17 an das Datenverarbeitungsgerät 11 weitergeleitet. Die CCD-Zeile 13 des spektral-optischen Systems 10 und das Datenverarbeitungsgerät 11 sind (neben der Laserdiode 1) ebenfalls (über die Leitung 5) mit dem Rechteckgenerator 4 verbunden. (Alternativ reicht es jedoch aus, dass neben der Laserdiode 1 lediglich die CCD-Zeile 13 über die Leitung 5 mit dem Rechteckgenerator 4 verbunden ist.) Die Ansteuerung der Laserdiode 1 und die Detektion der Raman-Spektren 16, 17 (bei den jeweiligen Anregungswellenlängen λ₁ und λ₂) kann somit synchron erfolgen. So kann das Datenverarbeitungsgerät 11 für die zwei unterschiedlichen Anregungswellenlängen λ₁ und λ₂ Raman-Spektren 16, 17 erhalten und dadurch in einfacher Weise ein Raman-Spektrum berechnen, in welchem der Untergrund (Fixed Pattern, Fluoreszenzuntergrund) rechnerisch eliminiert wird. Dazu wird aus den Raman-Spektren 16, 17 zunächst das Differenzspektrum 18 ermittelt (siehe Fig. 2), aus dem bereits Fixed Pattern und Untergrundsignale entfernt sind. Aus dem Differenzspektrum 18 kann dann eine mathematische Rekonstruktion 20 des Differenzspektrums erfolgen (siehe Fig. 4). Ein Vergleich mit einem Referenzspektrum (siehe Fig. 5) zeigt gute Übereinstimmung der Raman-Signale des rückgerechneten Spektrums mit denen des Referenzspektrums.

### Bezugszeichenliste

- 1: Laserdiode
- 2: optischer Isolator
- 3: Gleichstromquelle
- 4: Rechteckgenerator
- 5: Verbindung zwischen Rechteckgenerator und spektral-optischem System (CCD-Zeile)
- 6: optische Faser
- 7: Raman-Messkopf,
- 8: Medium (in einem Gefäß)
- 9: optische Faser
- 10: spektral-optisches System
- 11: Datenverarbeitungsgerät

- 13: CCD-Zeile
- 14: Spektrograph
- 15: Linsensystem
- 16: Raman-Spektrum von Phenanthren bei einer Anregungswellenlänge λ₁
- 17: Raman-Spektrum von Phenanthren bei einer Anregungswellenlänge λ₂
- 18: Differenzspektrum aus 16 und 17
- 20: Rekonstruktion des Differenzspektrums
- 21: Referenzspektrum von Phenanthren

## Patentansprüche

1. Verfahren zur Erzeugung und zur Detektion eines Raman-Spektrums (20) eines zu untersuchenden Mediums (8) mit folgenden Verfahrensschritten:
- Erzeugung elektromagnetischer Anregungsstrahlung mittels einer Laserdiode (1) mit einem internen frequenzselektiven Element,
- Einkoppeln der Anregungsstrahlung in das zu untersuchende Medium (8),
- wobei die Laserdiode (1) zur alternierenden Erzeugung unterschiedlicher Anregungswellenlängen (λ1, λ2) mittels des an die Laserdiode (1) angelegten elektrischen Stroms alternierend mit zwei unterschiedlichen Anregungsbedingungen angesteuert wird, wobei das Hin- und Herschalten zwischen den Anregungsbedingungen mit einer Frequenz größer als 1 Hz erfolgt,
- spektrale Analyse der vom zu untersuchenden Medium (8) gestreuten elektromagnetischen Strahlung durch Einkoppeln der gestreuten Strahlung in ein spektral-optisches System (10), wobei das spektral-optische System (10) ein Spektrograph (14) mit CCD-Zeile (13) ist,
- wobei aus der gestreuten Strahlung für die unterschiedlichen Anregungswellenlängen (λ1, λ2) jeweils mindestens ein Raman-Spektrum (16, 17) detektiert wird und aus den mindestens zwei detektierten Raman-Spektren (16, 17) unterschiedlicher Anregungswellenlängen (λ1, λ2) ein Raman-Spektrum (20) des zu untersuchenden Mediums (8) ermittelt wird, in dem der Fluoreszenzuntergrund rechnerisch eliminiert ist, und
- wobei die Detektion der einzelnen Raman-Spektren (16, 17) unterschiedlicher Anregungswellenlängen (λ1, λ2) mit der alternierenden Ansteuerung der Laserdiode (1) synchronisiert wird, und
- wobei die Detektion eines Raman-Spektrums (16, 17) jeweils innerhalb eines Zeitintervalls erfolgt, in dem die Stromstärke des an die Laserdiode (1) angelegten Stroms konstant gehalten wird.

2. Verfahren nach Anspruch 1,
**dadurch gekennzeichnet, dass**
die Laserdiode (1) innerhalb eines Zeitintervalls mit mindestens zwei unterschiedlichen Anregungsbedingungen derart angesteuert wird, dass sie auf mindestens zwei Wellenlängen mit einem Wellenlängenabstand von mindestens 0,5 nm emittiert.

3. Verfahren nach einem der vorhergehenden Ansprüche,
**dadurch gekennzeichnet, dass**
die Laserdiode (1) vor dem Einkoppeln der Anregungsstrahlung in das zu untersuchende Medium (8) kalibriert wird.

4. Verfahren nach Anspruch 1,
**dadurch gekennzeichnet, dass**
als frequenzselektives Element ein Gitter, ein Etalon oder ein Mach-Zehnder-Interferometer verwendet wird.

5. Verfahren nach einem der vorhergehenden Ansprüche,
**dadurch gekennzeichnet, dass**
die von der Laserdiode (1) erzeugte Anregungsstrahlung mittels eines Raman-Messkopfes (7) in das zu untersuchende Medium (8) eingekoppelt wird.

6. Verfahren nach einem der vorhergehenden Ansprüche,
**dadurch gekennzeichnet, dass**
die von der Laserdiode (1) erzeugte Anregungsstrahlung vor dem Einkoppeln in das zu untersuchende Medium (8) verstärkt wird.

7. Verfahren nach einem der vorhergehenden Ansprüche,
**dadurch gekennzeichnet, dass**
die vom zu untersuchenden Medium (8) gestreute Strahlung mittels einer optischen Faser (9) in das spektral-optische System (10) eingekoppelt wird.

8. Verfahren nach Anspruch 1,
**dadurch gekennzeichnet, dass**
die Laserdiode (1) mittels einer Stromquelle (3) angesteuert wird, wobei die Ausgangsleistung der Stromquelle (3) moduliert wird.

9. Verfahren nach Anspruch 8,
**dadurch gekennzeichnet, dass**
zur Modulation ein Funktionsgenerator (4) verwendet wird.

10. Verfahren nach Anspruch 1,
**dadurch gekennzeichnet, dass**
die einzelnen Raman-Spektren (16, 17) mittels eines Datenverarbeitungsgerätes (11) gespeichert werden.

11. Verfahren nach Anspruch 1,
**dadurch gekennzeichnet, dass**
zur Synchronisation der Detektionen der Raman-Spektren (16, 17) und der Ansteuerung der Laserdiode (1) sowohl die Ausgangsleistung einer Stromquelle moduliert als auch ein Detektor des spektral-optischen Systems (10) synchronisiert werden.

12. Verfahren nach einem der vorhergehenden Ansprüche,
**dadurch gekennzeichnet, dass**
aus den mindestens zwei frequenzverschobenen detektierten Raman-Spektren (16, 17) der Untergrund und das Fixed Pattern rechnerisch eliminiert wird.

13. Vorrichtung zur Erzeugung einer Anregungsstrahlung und zur Detektion eines Raman-Spektrums (20) eines zu untersuchenden Mediums (8) aufweisend:
eine als Anregungslichtquelle fungierende Laserdiode (1) mit einem internen frequenz-selektiven Element,
- wobei die Laserdiode (1) zur Erzeugung unterschiedlicher Anregungswellenlängen (λ1, λ2) mit einer von einem Modulator (4) modulierten Stromquelle (3) verbunden ist, und der Modulator (4) die Stromquelle (3) alternierend moduliert, wobei das Hin- und Herschalten mit einer Frequenz größer als 1 Hz erfolgt,
- Mittel zur Einkopplung der von der Laserdiode (1) emittierten Anregungsstrahlung in das zu untersuchende Medium (8),
- Mittel zur Einkopplung der vom zu untersuchenden Medium (8) gestreuten Strahlung in ein spektral-optisches System (10), wobei das spektral-optische System (10) ein Spektrograph (14) mit CCD-Zeile (13) ist,
- ein Datenverarbeitungsgerät (11), das mit dem spektral-optischen System (10) verbunden ist, wobei das Datenverarbeitungsgerät (11) aus den mindestens zwei detektierten Raman-Spektren (16, 17) unterschiedlicher Anregungswellenlängen (λ1, λ2) ein Raman-Spektrum des zu untersuchenden Mediums (8) berechnet, in dem der Fluoreszenzuntergrund rechnerisch eliminiert ist, und
- wobei das spektral-optische System (10) und/oder das Datenverarbeitungsgerät (11) mit dem Modulator (4) verbunden und die Detektion der einzelnen Raman-Spektren (16, 17) unterschiedlicher Anregungswellenlängen (λ1, λ2) mit der alternierenden Ansteuerung der Laserdiode (1) synchronisiert ist.

14. Vorrichtung nach Anspruch 13,
**dadurch gekennzeichnet, dass**
der Modulator ein Funktionsgenerator ist.

15. Vorrichtung nach Anspruch 14,
**dadurch gekennzeichnet, dass**
der Modulator ein Rechteckgenerator (4) ist.

16. Vorrichtung nach einem der Ansprüche 13 bis 15,
**dadurch gekennzeichnet, dass**
das Mittel zum Einkoppeln der Anregungsstrahlung in das zu untersuchende Medium (8) und das Mittel zum Einkoppeln der vom zu untersuchenden Medium (8) gestreuten Strahlung in das spektral-optische System (10) eine optische Faser (9) und einen Raman-Messkopf (7) aufweisen.

17. Vorrichtung nach Anspruch 16,
**dadurch gekennzeichnet, dass**
zwischen Laserdiode (1) und zu untersuchendem Medium (8) ein optischer Verstärker angeordnet ist.

18. Vorrichtung nach einem der Ansprüche 13 bis 17,
**dadurch gekennzeichnet, dass**
das interne frequenz-selektive Element ein Gitter, ein Etalon oder ein Mach-Zehnder-Interferometer ist.

## Claims

1. Method for generating and detecting a Raman spectrum (20) of a medium (8) to be investigated, comprising the following steps:
- producing electromagnetic excitation radiation by means of a laser diode (1) with an internal frequency-selective element,
- coupling the excitation radiation into the medium (8) to be investigated,
- wherein the laser diode (1) is driven for alternately generating different excitation wavelengths (*λ*1, *λ*2) by means of the electric current applied to the laser diode (1), alternating with two different exciting conditions, wherein the switching back and forth between the excitation conditions is performed at a frequency greater than 1 Hz,
- spectral analysis of the electromagnetic radiation scattered by the medium (8) to be investigated by coupling the scattered radiation into a spectral-optical system (10), wherein the spectral-optical system (10) is a spectrograph (14) with a CCD line (13),
- wherein from the scattered radiation for the different excitation wavelengths (*λ*1, *λ*2) at least one Raman spectrum (16, 17) is detected and from the at least two detected Raman spectra (16, 17) with different excitation wavelengths (*λ*(1, *λ*2) a Raman spectrum (20) of the medium (8) to be investigated is determined, in which the fluorescent background is eliminated by computer, and
- wherein the detection of the individual Raman spectra (16, 17) of different excitation wavelengths (*λ*(1, *λ*2) is synchronised with the alternating drive of the laser diode (1), and
- wherein the detection of a Raman spectrum (16, 17) is performed respectively within a time interval in which the strength of the current applied to the laser diode (1) is kept constant.

2. Method according to claim 1,
**characterised in that**
the laser diode (1) is driven within a time interval according to at least two different excitation conditions in such a way that the laser diode emits at least two wavelengths with a wavelength separation of at least 0.5 nm.

3. Method according to any of the preceding claims,
**characterised in that**
the laser diode (1) is calibrated before the excitation radiation is coupled into the medium (8) to be investigated.

4. Method according to claim 1,
**characterised in that**
a grid, an etalon or a Mach-Zehnder interferometer is used as the frequency-selective element.

5. Method according to any of the preceding claims,
**characterised in that**
the excitation radiation produced by the laser diode (1) is coupled by means of a Raman measuring head (7) into the medium (8) to be investigated.

6. Method according to any of the preceding claims,
**characterised in that**
the excitation radiation produced by the laser diode (1) is amplified before being coupled into the medium (8) to be investigated.

7. Method according to any of the preceding claims,
**characterised in that**
the radiation scattered by the medium (8) to be investigated is coupled by means of an optical fibre (9) into the spectral optical system (10).

8. Method according to claim 1,
**characterised in that**
the laser diode (1) is driven by means of a power source (3), wherein the output of the power source (3) is modulated.

9. Method according to claim 8,
**characterised in that**
a function generator (4) is used for the modulation.

10. Method according to claim 1,
**characterised in that**
the individual Raman spectra (16, 17) are saved by means of a data processing device (11).

11. Method according to claim 1,
**characterised in that**
for synchronising the detection of the Raman spectra (16, 17) and the drive of the laser diode (1) both the output of a power source is modulated and also a detector of the spectral optical system (10) is synchronised.

12. Method according to any of the preceding claims,
**characterised in that**
from the at least two frequency-shifted detected Raman spectra (16, 17) the background and the fixed pattern are eliminated by computer.

13. Device for generating excitation radiation and detecting a Raman spectrum (20) of a medium (8) to be investigated comprising: a laser diode (1) functioning as an excitation light source comprising an internal frequency-selective element,
- wherein the laser diode (1) for producing different excitation wavelengths (*λ*1, *λ*2) is connected to a power source (3) modulated by a modulator (4), and the modulator (4) modulates the power source (3) alternately, wherein the switching back and force is performed at a frequency greater than 1 Hz,
- means for coupling the excitation radiation emitted by the laser diode (1) into the medium (8) to be investigated,
- means for coupling the radiation scattered by the medium (8) to be investigated into a spectral-optical system (10), wherein the spectral-optical system (10) is a spectrograph (14) with a CCD-line (13),
- a data processing device (11), which is connected to the spectral-optical system (10), wherein the data processing device (11) calculates from the at least two detected Raman spectra (16, 17) with different excitation wavelengths (*λ*I, *λ*2) a Raman spectrum of the medium (8) to be investigated, in which the fluorescent background is eliminated by computer, and
- wherein the spectral-optical system (10) and/or the data processing device (11) is connected to the modulator (4) and the detection of the individual Raman spectra (16, 17) of different excitation wavelengths (*λ*I, *λ*2) is synchronised with the alternating drive of the laser diode (1).

14. Device according to claim 13,
**characterised in that**
the modulator is a function generator.

15. Device according to claim 14,
**characterised in that**
the modulator is a rectangle generator (4).

16. Device according to any of claims 13 to 15,
**characterised in that**
the means for coupling the excitation radiation into the medium (8) to be investigated and the means for coupling the radiation scattered by the medium (8) to be investigated into the spectral-optical system (10) comprise an optical fibre (9) and a Raman measuring head (7).

17. Device according to claim 16,
**characterised in that**
an optical amplifier is arranged between the laser diode (1) and medium (8) to be investigated.

18. Device according to any of claims 13 to 17,
**characterised in that**
the internal frequency-selective element is a grid, an etalon or a Mach-Zehnder interferometer.

## Revendications

1. Procédé de génération et de détection d'un spectre de Raman (20) d'un milieu (8) à examiner, comprenant les étapes suivantes :
- génération d'un rayonnement électromagnétique d'excitation au moyen d'une diode laser (1) avec un élément interne à sélection de fréquence,
- couplage du rayonnement d'excitation dans le milieu (8) à examiner,
- la diode laser (1) étant, pour la génération alternée de différentes longueurs d'onde d'excitation (*λ*(1, *λ*(2), commandée au moyen du courant électrique appliqué sur la diode laser (1), en alternance avec deux conditions d'excitation différentes, la commutation aller-retour entre les conditions d'excitation étant effectuée avec une fréquence supérieure à 1 Hz,
- analyse spectrale du rayonnement électromagnétique diffusé par le milieu (8) à examiner par couplage du rayonnement diffusé dans un système spectral-optique (10), ledit système spectral-optique (10) étant un spectrographe (14) à rangée de CCD (13),
- au moins un spectre de Raman (16, 17) étant détecté à partir du rayonnement diffusé pour chacune des différentes longueurs d'onde d'excitation (*λ*(1, *λ*2) et un spectre de Raman (20) du milieu (8) à examiner étant déterminé à partir des au moins deux spectres de Raman (16, 17) de différentes longueurs d'onde d'excitation (*λ*(1, *λ*2) détectés, dans lequel la fluorescence de fond est éliminée par calcul, et
- la détection des différents spectres de Raman (16, 17) de différentes longueurs d'onde d'excitation (*λ*(1, *λ*2) étant synchronisée avec la commande alternée de la diode laser (1), et
- la détection d'un spectre de Raman (16, 17) étant effectuée pendant un intervalle temporel où l'intensité du courant appliqué sur la diode laser (1) est maintenue constante.

2. Procédé selon la revendication 1,
**caractérisé**
**en ce que** la diode laser (1) est commandée avec au moins deux conditions d'excitation différentes pendant un intervalle temporel, de sorte qu'elle émet au moins deux longueurs d'onde avec un écart de longueurs d'onde d'au moins 0,5 nm.

3. Procédé selon l'une des revendications précédentes,
**caractérisé**
**en ce que** la diode laser (1) est étalonnée dans le milieu (8) à examiner avant couplage du rayonnement d'excitation.

4. Procédé selon la revendication 1,
**caractérisé**
**en ce qu'**une grille, un étalon ou un interféromètre Mach-Zehnder sont utilisés comme élément à sélection de fréquence.

5. Procédé selon l'une des revendications précédentes,
**caractérisé**
**en ce que** le rayonnement d'excitation généré par la diode laser (1) est couplé dans le milieu (8) à examiner au moyen d'une tête de mesure Raman (7).

6. Procédé selon l'une des revendications précédentes,
**caractérisé**
**en ce que** le rayonnement d'excitation généré par la diode laser (1) est amplifié avant couplage dans le milieu (8) à examiner.

7. Procédé selon l'une des revendications précédentes,
**caractérisé**
**en ce que** le rayonnement diffusé par le milieu (8) à examiner est couplé dans le système spectral-optique (10) au moyen d'une fibre optique (9).

8. Procédé selon la revendication 1,
**caractérisé**
**en ce que** la diode laser (1) est commandée au moyen d'une source de courant (3), la puissance initiale de la source de courant (3) étant modulée.

9. Procédé selon la revendication 8,
**caractérisé**
**en ce qu'**un générateur de fonctions (4) est utilisé pour la modulation.

10. Procédé selon la revendication 1,
**caractérisé**
**en ce que** les différents spectres de Raman (16, 17) sont mémorisés au moyen d'un appareil de traitement de données (11).

11. Procédé selon la revendication 1,
**caractérisé**
**en ce que**, pour la synchronisation des détections des spectres de Raman (16, 17) et de la commande de la diode laser (1), la puissance initiale d'une source de courant est modulée et un détecteur du système spectral-optique (10) sont synchronisés.

12. Procédé selon l'une des revendications précédentes,
**caractérisé**
**en ce que** le fond et le motif fixe des au moins deux spectres de Raman (16, 17) à décalage de fréquence détectés sont éliminés par calcul.

13. Dispositif pour la génération d'un rayonnement d'excitation et pour la détection d'un spectre de Raman (20) d'un milieu (8) à examiner, comprenant : une diode laser (1) fonctionnant comme source lumineuse d'excitation avec un élément interne à sélection de fréquence,
- la diode laser (1) étant reliée à une source de courant (3) modulée par un modulateur (4) pour la génération de différentes longueurs d'onde d'excitation (*λ*(1, *λ*2), et le modulateur (4) modulant la source de courant (3) en alternance, la commutation aller-retour étant effectuée avec une fréquence supérieure à 1 Hz,
- un moyen de couplage du rayonnement d'excitation émis par la diode laser (1) dans le milieu (8) à examiner,
- un moyen de couplage du rayonnement diffusé par le milieu (8) à examiner dans un système spectral-optique (10), ledit système spectral-optique (10) étant un spectrographe (14) à rangée de CCD (13),
- un appareil de traitement de données (11) relié au système spectral-optique (10), ledit appareil de traitement de données (11) calculant un spectre de Raman du milieu (8) à examiner à partir des au moins deux spectres de Raman (16, 17) détectés de différentes longueurs d'onde d'excitation (*λ*I, *λ*2), dans lequel la fluorescence de fond est éliminée par calcul, et
- le système spectral-optique (10) et/ou l'appareil de traitement de données (11) étant reliés au modulateur (4) et la détection des différents spectres de Raman (16, 17) de différentes longueurs d'onde d'excitation (*λ*I, *λ*2) étant synchronisée avec la commande alternée de la diode laser (1).

14. Dispositif selon la revendication 13,
**caractérisé**
**en ce que** le modulateur est un générateur de fonctions.

15. Dispositif selon la revendication 14,
**caractérisé**
**en ce que** le modulateur est un générateur de signaux rectangulaires (4).

16. Dispositif selon l'une des revendications 13 à 15,
**caractérisé**
**en ce que** le moyen de couplage du rayonnement d'excitation dans le milieu (8) à examiner et le moyen de couplage du rayonnement diffusé par le milieu (8) à examiner dans le système spectral-optique (10) comprenant un fibre optique (9) et une tête de mesure Raman (7).

17. Dispositif selon la revendication 16,
**caractérisé**
**en ce qu'**un amplificateur optique est disposé entre la diode laser (1) et le milieu (8) à examiner.

18. Dispositif selon l'une des revendications 13 à 17,
**caractérisé**
**en ce que** l'élément interne à sélection de fréquence est une grille, un étalon ou un interféromètre Mach-Zehnder.
